# EUROPEAN PATENT APPLICATION

(11) **EP 3 395 548 A1**
(43) Date of publication of application: **31.10.2018**
(21) Application number: 16878423.9
(22) Date of filing: 09.12.2016
(51) Int. Cl.: B29C 65/60, B23K 11/20, B23K 20/12, B23K 26/22, B29C 65/52, B29C 65/72, F16B 5/04, F16B 5/08

(54) **DIFFERENT-MATERIAL JOINING STRUCTURE**

(30) Priority: 25.12.2015 JP 2015253936
(71) Applicant: Kabushiki Kaisha Kobe Seiko Sho (Kobe Steel, Ltd.), Kobe-shi, Hyogo 651-8585 (JP)
(72) Inventor: IWASE, Tetsu, Kanagawa 251-8551 (JP)
(74) Representative: Müller-Boré & Partner Patentanwälte PartG mbB
(86) International application number: PCT/JP2016/086767
(87) International publication number: WO 2017/110531

(57) **Abstract**

A different-material joining structure includes a plurality of different types of plate materials stacked on one other and secured by means of a rivet. The plate materials include a first member and a second member of which end surfaces at one end of each overlap each other, and a third member arranged overlapping the surface of the first member on the opposite side to the second member. The rivet has a shank part penetrating through the first member and the third member and joined to the second member at a tip end thereof, and a head part not inserted into the third member and remaining on the surface of the third member. A joining part for joining the first member and the third member together is formed in at least a part of an overlapping region of the first member and the third member, on the side toward the other end of the second member relative to the position at which the rivet penetrates.

## Description

### Technical Field

The present invention relates to a different-material joining structure.

### Background Art

In recent years, studies have been made to reduce the weight by making a part of steel materials used for structures such as automobiles and railway vehicles light alloys such as aluminum and magnesium, or fiber reinforced plastics (FRP) or the like. However, in order to realize this, it is necessary to join members made of different types of materials, light alloy or resin and steel material. Examples of such a method of joining different materials include joining by bolts, rivets, pins, and joining using an adhesive. Among them, a method of clinching and fixing light alloy using rivets made of steel and spot-welding the rivets to a steel material can firmly join together different materials, so various studies have been made on improvement of rivets.

For example, PTLs 1 and 2 disclose a technique in which rivets are driven into a light alloy material, clinched, and spot-welded to a steel material. PTL 3 discloses a technique in which a pilot hole is formed in an aluminum-based metal material and joining is performed while pressing with a spot welding electrode. PTL 4 discloses a technique in which a rivet is pushed into an upper member while being rotated and is friction-welded at the tip end of the rivet shank (pin).

In each of the techniques disclosed in PTLs 1 to 4, a rivet and a member joined at the tip end of the rivet are joined by the same type of metal (for example, steel material).

### Citation List

### Patent Literature

PTL 1: Japanese Unexamined Patent Application Publication No. 2009-285678
PTL 2: International Publication No. 2012/041516
PTL 3: Japanese Unexamined Patent Application Publication No. 7-214338
PTL 4: Japanese Unexamined Patent Application Publication (Translation of PCT Application) No. 2013-527804

### Summary of Invention

### Technical Problem

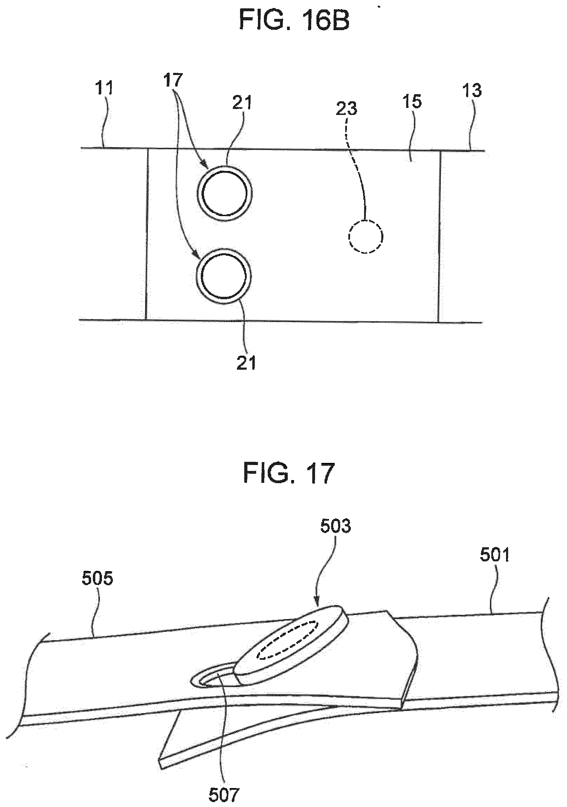

However, the different-material joining structure obtained by the different-material joining may be subjected to a heavy load depending on the application. Particularly in the automobile field, since it is also required to improve the safety performance as well as weight reduction, it is necessary to increase the load borne by each member. In the techniques disclosed in PTLs 1 to 4, the tip end of the rivet (or pin) is firmly joined, but a light alloy material, a resin material, or the like is used in the shank part through which the rivet passes. In such a different-material joining structure, when a tensile load is applied to a steel material and a light alloy material or a resin material, since the tip end of the rivet shank is firmly joined, the rivet is pulled together with the steel material. As a result, as shown in Fig. 17, the rivet 503 fixed to the steel material 501 is inclined and the hole 507 penetrating the light alloy material 505 or the resin material is enlarged in the tensile direction. Thereby, the light alloy material 505 or the resin material may be broken. In the different-material joining structure, it is required to solving such problems, and to improve the strength of the members while satisfying the reduction in weight.

The present invention has been made in view of the above matters, and an object thereof is to provide a different-material joining structure whose different material joining strength can be improved while satisfying weight reduction.

### Solution to Problem

A different-material joining structure of the present invention includes a plurality of different types of plate materials stacked on one other and secured by means of a rivet.

The plate materials include a first member and a second member of which end surfaces at one end of each overlap each other, and a third member arranged overlapping the surface of the first member on the opposite side to the second member.

The rivet has a shank part penetrating through the first member and the third member and joined to the second member at a tip end thereof, and a head part not inserted into the third member and remaining on the surface of the third member.

A joining part for joining the first member and the third member together is formed in at least a part of an overlapping region of the first member and the third member, on the side toward the other end of the second member relative to the position at which the rivet penetrates.

In the different-material joining structure, it is preferable that the rivet be provided in a state being clinched and fixed to at least one of the first member and the third member.

In the different-material joining structure, it is preferable that at least one of the first member and the third member be made of an aluminum alloy material.

In the different-material joining structure, it is preferable that the joining part include an adhesive layer joining the first member and the third member.

In the different-material joining structure, it is preferable that the first member and the third member be made of the same type of metal material, and the joining part include a welded part joining the first member and the third member.

In the different-material joining structure, it is preferable that the third member be formed by stacking a plurality of plate materials.

In the different-material joining structure, it is preferable that the third member be formed by folding an end of the first member, and the joining part include a bent part of the folded first member.

### Advantageous Effects of Invention

According to the different-material joining structure of the present invention, it is possible to improve different material joining strength while satisfying weight reduction. Brief Description of Drawings
[Fig. 1] Fig. 1 is a perspective view of a different-material joining structure according to a first embodiment of the present invention.
[Fig. 2] Fig. 2 is a plan view of the different-material joining structure shown in Fig. 1.
[Fig. 3] Fig. 3 is a sectional view taken along line III-III of Fig. 2.
[Fig. 4] Fig. 4 is a perspective view of the rivet shown in Fig. 1 as viewed from the diagonally tip end side of the shank.
[Fig. 5A] Fig. 5A is a process diagram showing the procedure of fixing by means of a rivet.
[Fig. 5B] Fig. 5B is a process diagram showing the procedure of fixing by means of a rivet.
[Fig. 5C] Fig. 5C is a process diagram showing the procedure of fixing by means of a rivet.
[Fig. 6] Fig. 6 is a sectional view showing an example of a method of fixing the joining part.
[Fig. 7A] Fig. 7A is a sectional view of the different-material joining structure before a tensile load is applied.
[Fig. 7B] Fig. 7B is a sectional view of the different-material joining structure after a tensile load is applied.
[Fig. 8] Fig. 8 is a perspective view of the different-material joining structure shown in Fig. 7B.
[Fig. 9] Fig. 9 is a perspective view of a different-material joining structure as a reference example in which the third member and the first member are not joined at the joining part.
[Fig. 10] Fig. 10 is a sectional view showing a fixing structure of a rivet that is a modification of a first configuration example.
[Fig. 11] Fig. 11 is a sectional view of a different-material joining structure of a second configuration example.
[Fig. 12] Fig. 12 is a sectional view of a different-material joining structure of a third configuration example.
[Fig. 13] Fig. 13 is a sectional view of a different-material joining structure of a fourth configuration example.
[Fig. 14] Fig. 14 is a sectional view of a rivet usable for a different-material joining structure.
[Fig. 15] Fig. 15 is a sectional view of another rivet usable for a different-material joining structure.
[Fig. 16A] Fig. 16A is a plan view showing a modification of the different-material joining structure having another example of the joining part.
[Fig. 16B] Fig. 16B is a plan view showing a modification of the different-material joining structure having another example of the joining part.
[Fig. 17] Fig. 17 is a perspective view of a conventional different-material joining structure after a tensile load is applied.

### Description of Embodiments

Hereinafter, embodiments of the present invention will be described in detail with reference to the drawings.

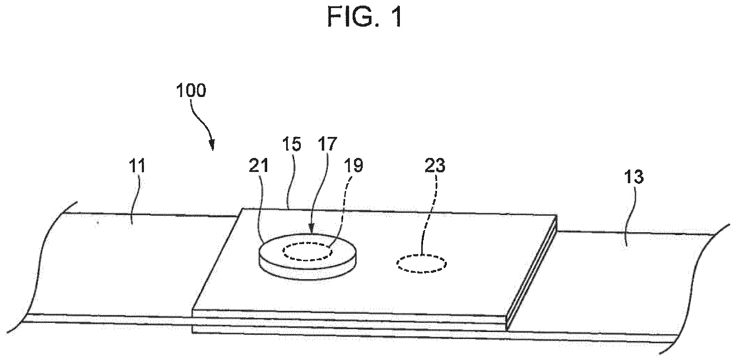

Fig. 1 is a perspective view of a different-material joining structure according to a first embodiment of the present invention.

A different-material joining structure 100 according to this embodiment includes a plurality of different types of plate materials stacked on one other and secured by means of a rivet. The plate materials include a first member 11 and a second member 13 of which end surfaces at one end of each overlap each other, and a third member 15 arranged overlapping the surface of the first member 11 on the opposite side to the second member 13.

The first member 11, the second member 13, and the third member 15 are joined by means of a rivet 17. The rivet 17 is made of the same material as that of the second member 13 and has a shank part 19 and a head part 21. The shank part 19 penetrates through the third member 15 and the first member 11, and the tip end thereof is joined to the second member 13 by welding. The head part 21 does not pass through the third member 15, but remains on the surface of the third member 15, and sandwiches the third member 15 and the first member 11 between itself and the second member 13.

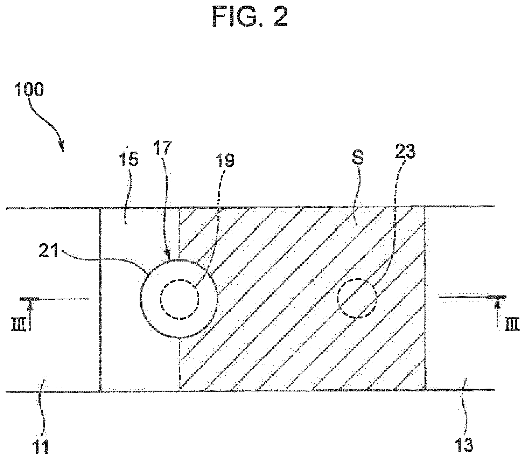

Fig. 2 is a plan view of the different-material joining structure shown in Fig. 1.

The first member 11 and the third member 15 are joined by a joining part 23. As will be described later in detail, the joining part 23 is provided in a region S in an overlapping region of the first member 11 and the third member 15, on the side toward the other end of the second member 13 relative to the position at which the rivet 17 penetrates (right side in Fig. 2).

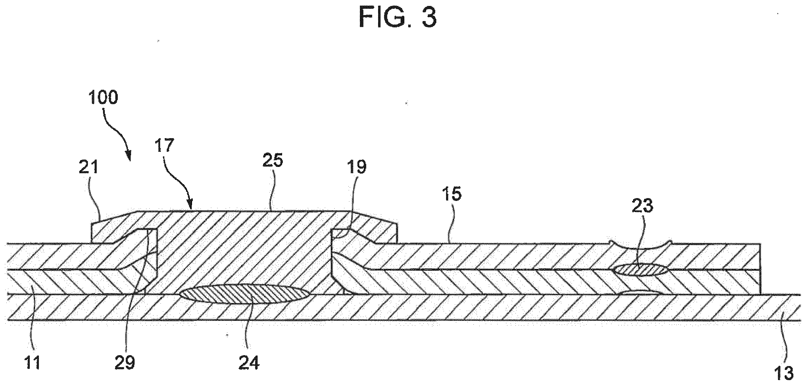

Fig. 3 is a sectional view taken along line III-III of Fig. 2.

The first member 11 and the second member 13 can be composed by appropriately combining light metal and resin. For example, the first member 11 and the second member 13 can be composed of a combination of light metal and light metal, light metal and resin, or resin and resin.

Examples of light metals include aluminum, aluminum alloy material (2000 series, 3000 series, 4000 series, 5000 series, 6000 series, or 7000 series of JIS standard), magnesium, magnesium alloy material, and metal materials obtained by combining them.

CFRP (carbon fiber reinforced plastic), fiber-reinforced PP (polypropylene), or the like can be suitably used as resin. In addition, glass fiber reinforced plastic (GFRP), glass long fiber reinforced plastic (GMT), boron fiber reinforced plastic (BFRP), aramid fiber reinforced plastic (AFRP, KFRP), polyethylene fiber reinforced plastic (DFRP), Zylon fiber reinforced plastic (ZFRP), or the like can also be used as resin. Further, thermoplastic resins such as polyamide, polyethylene, polystyrene, ABS resin, vinyl chloride resin, fluororesin, or the like can also be used.

The second member 13 is made of a steel material. Specific material types include high tensile strength steel, galvanized steel plate, and stainless steel material. A hot stamp (hot press) material or the like can also be used as the high tensile steel material.

It is preferable that the rivet 17 be a forging having the head part 21 and the shank part 19 from the viewpoint of the productivity and mounting property of the rivet 17. In the case where the member to be welded is made of a steel material, the rivet 17 is preferably made of the same steel material from the viewpoint of improving the bonding strength. If the rivet 17 and the second member 13 are made of the same steel material, the welded part 24 at the tip end of the rivet 17 can be firmly joined without generating an intermetallic compound. As the steel material used for the rivet 17, mild steel, stainless steel, high tensile strength steel, and the like can be appropriately adopted according to the application.

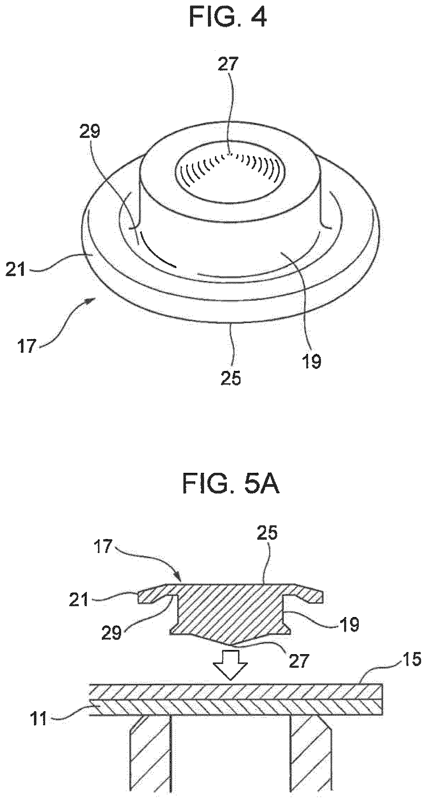

Fig. 4 is a perspective view of the rivet shown in Fig. 1 as viewed from the diagonally tip end side of the shank.

In the rivet 17, an insulation layer (a coating film having an electrical resistance higher than that of steel material) is formed over the entire surface excluding the base end side end face 25 of the head part 21 and the tip end face of the shank part 19 (including the end face of the protrusion 27). For example, the insulation layer is formed of a coating having higher resistivity than steel material, such as DISGO (registered trademark), LAFRE (registered trademark), GEOMET (registered trademark), polyester-based resin pre-coating, or silicone elastomer. The insulation layer may be formed at least in an area where the rivet 17 comes into contact with the first member 11 and the third member 15 made of light metal when the rivet 17 is driven into the first member 11 and the third member 15. As a result, galvanic corrosion between different metals can be suppressed. The main part (the part excluding the insulation layer) of the rivet 17 is formed by forging from the material.

Figs. 5A to 5C are process diagrams showing the procedure of fixing by means of a rivet.

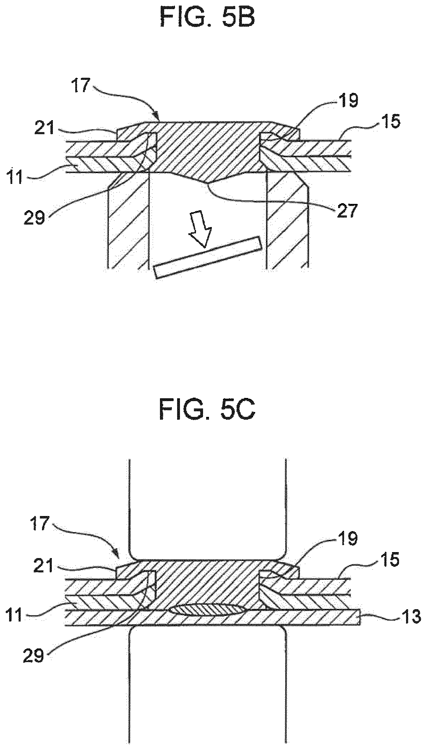

It is preferable that, in the different-material joining structure 100, the rivet 17 be provided in a state being clinched and fixed to at least one of the first member 11 and the third member 15. For the rivet 17, methods disclosed, for example, in Japanese Unexamined Patent Application Publication No. 7-214338 and Japanese Unexamined Patent Application Publication No. 2010-207898 can be adopted. In this case, as shown in Figs. 5A and 5B, the third member 15 and the first member 11 are punched at once by the shank part 19 of the rivet 17 and clinching is performed. Thereafter, as shown in Fig. 5C, the rivet 17 is joined to the second member 13 by resistance welding or the like.

The rivet 17 has a head part 21 having a diameter larger than that of the shank part 19, and a circumferential groove 29 (see Fig. 4) may be provided around the shank part of the head part 21, or the shank part 19 may have a reduced diameter part. Also in this case, the material type of the rivet 17 may be a material such as mild steel or tool steel that can be welded (fusion-welded, friction-welded) to the third member 15.

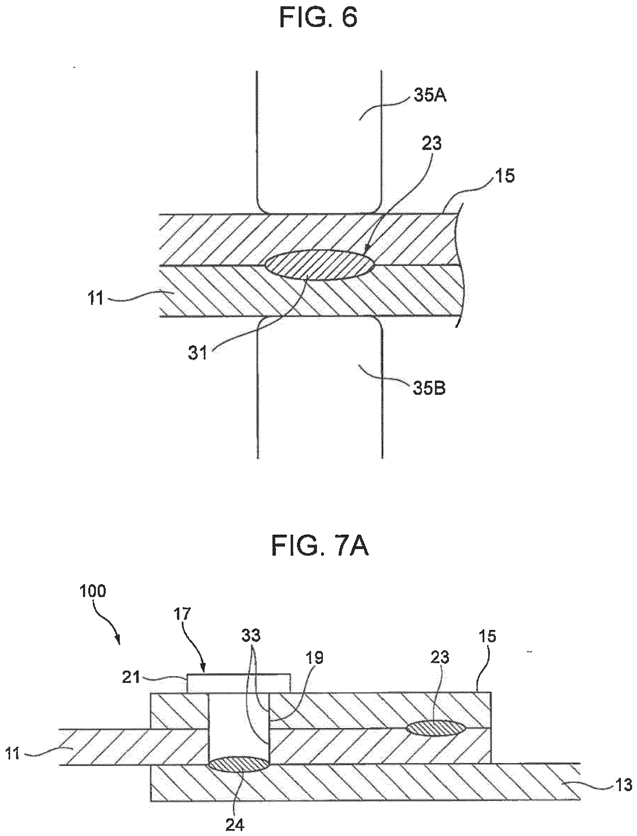

Fig. 6 is a sectional view showing an example of a method of fixing the joining part.

In this configuration example, in the different-material joining structure 100, the first member 11 and the third member 15 are made of the same type of metal material. The first member 11 and the third member 15 are sandwiched between a pair of electrodes 35A and 35B, and a pulse current is applied from the electrodes 35A and 35B. As a result, a nugget (welded part) 31 by resistance spot welding is formed at the interface between the first member 11 and the third member 15. The welded part 31 serves as the joining part 23 described above.

The joining part 23 is preferably arranged on a straight line that passes through the center of the rivet 17 and is along the tensile direction. The joining part 23 is arranged in a one-to-one positional relationship with the rivet 17, but the number and the positional relationship of the rivet 17 and the joining part 23 are not limited thereto.

When the first member 11 and the second member 13 are made of a metal material, resistance spot welding, laser spot welding, friction stir spot welding, laser welding, friction joining, and bonding using an adhesive may be used as a means for forming the joining part 23. In the case where at least one of the first member 11 and the third member 15 is made of a resin material, it can be joined using an adhesive.

Next, the operation of the above configuration will be described.

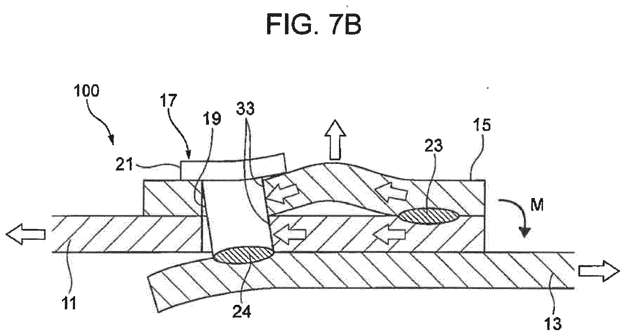

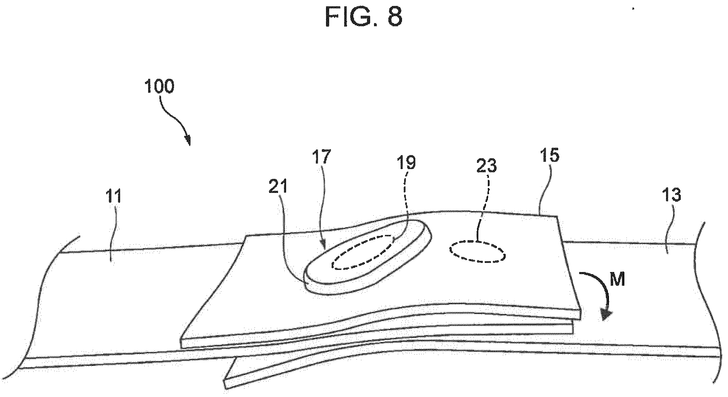

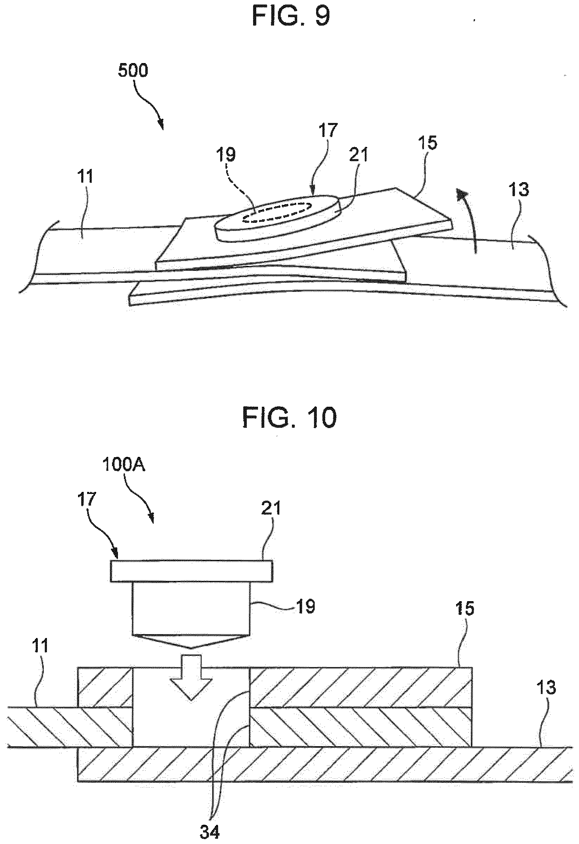

Fig. 7A is a sectional view of the different-material joining structure before a tensile load is applied, Fig. 7B is a sectional view of the different-material joining structure after a tensile load is applied, Fig. 8 is a perspective view of the different-material joining structure shown in Fig. 7B, and Fig. 9 is a perspective view of a different-material joining structure as a reference example in which the third member 15 and the first member are not joined at the joining part.

In the different-material joining structure 100 of the present embodiment, when the first member 11 and the second member 13 are pulled in the separating direction, the side walls of the rivet through holes 33 of the first member 11 and the third member 15 joined at the joining part 23 are brought into contact with the shank part 19. As shown in Fig. 7B, the shank part 19 is pressed by the side walls of the rivet through holes 33, and the rivet 17 is inclined in the tensile direction of the first member 11.

In the first member 11, since the reaction force from the shank part 19, which is conventionally received by one plate, is shared by the side wall of the rivet through hole 33 of the third member 15 that is in contact with the shank part 19, the reaction force is reduced by approximately half. Therefore, even if a tensile load equivalent to that of the conventional art is applied to the first member 11, expansion (plastic deformation) of the rivet through hole 33 in the tensile direction is suppressed.

In addition, a force in a direction to tilt the rivet 17 is applied to the third member 15 from the joining part 23, and a reaction force from the shank part 19 acts on the rivet through hole 33. As a result, stress concentration occurs between the rivet through hole 33 of the third member 15 and the joining part 23. As a result of this stress concentration, the third member 15 deforms to a chevron shape in a direction in which the part between the rivet through hole 33 and the joining part 23 rises.

The inclination of the rivet 17 is relieved by the bending deformation of the third member 15. As a result, even if a strong tensile load acts on the different-material joining structure 100, the inclination of the rivet 17 is reduced and the joining strength of the different-material joining structure 100 is improved.

Furthermore, when the above-described bending deformation occurs, since the third member 15 is joined to the first member 11 at the joining part 23, the third member 15 generates a bending moment M in the direction of bringing the first member 11 closer to the second member 13. Therefore, the third member 15 presses the first member 11 against the second member 13 and increases the friction in the direction in which the members come into close contact with each other. As a result, in the different-material joining structure 100, as compared with the case where the third member 15 is warped as in the different-material joining structure 500 shown in Fig. 9 as a reference example in which the joining part 23 does not exist, the third member 15 can contribute to improving the strength of the joining structure.

In addition, in the different-material joining structure 100, since the rivet 17 is clinched and fixed to at least one of the first member 11 and the third member 15, it is possible to obtain high joining strength due to a synergistic effect of the sandwiching structure of the third member 15, the first member 11, and the second member 13 by the rivet 17 and the clinching and fixing of the rivet 17, the first member 11, and the third member 15.

In the different-material joining structure 100, at least one of the first member 11 and the third member 15 is made of an aluminum alloy material. Therefore, the members can be joined with high strength, and as compared with the case where they are made of a steel material, the weight can be reduced.

Furthermore, in the different-material joining structure 100, the first member 11 and the third member 15 are made of the same type of metal material, and the joining part 23 includes the welded part 31. Therefore, the joining part 23 is firmly connected without generating an intermetallic compound.

In the present configuration example, the third member 15 is composed of a single plate member, but the present invention is not limited thereto. The third member 15 may be composed of two or more plate materials, and materials of various characteristics and strength may be combined. In the different-material joining structure 100, by stacking the third member 15 composed of a plurality of plate materials, it is possible to add various functions such as decorativeness, corrosion resistance, insulation and the like to the third member 15 on the upper surface side.

As shown in Fig. 2, the joining part 23 is provided in at least a part of a region S in an overlapping region of the first member 11 and the third member 15, on the other end side of the second member 13 relative to the position at which the rivet penetrates, that is, on the side opposite to one end of the second member 13 on the side joined to the first member 11. By disposing the joining part 23 in the region S, the above-described third member 15 is easily deformed into a chevron shape, and the effect of reducing the inclination of the rivet 17 is obtained.

Fig. 10 is a sectional view showing a fixing structure of a rivet that is a modification of a first configuration example.

In the different-material joining structure 100A, as a method for attaching the rivet 17, through holes 34 may be formed in the first member 11 and the third member 15 beforehand, and the rivet 17 may be inserted through the through holes 34, and welded to the second member 13.

According to the different-material joining structure 100A of this modification, even when the total thickness of both the first member 11 and the third member 15 exceeds the press-fit limit of the rivet 17, it is possible to perform secure joining to the second member 13.

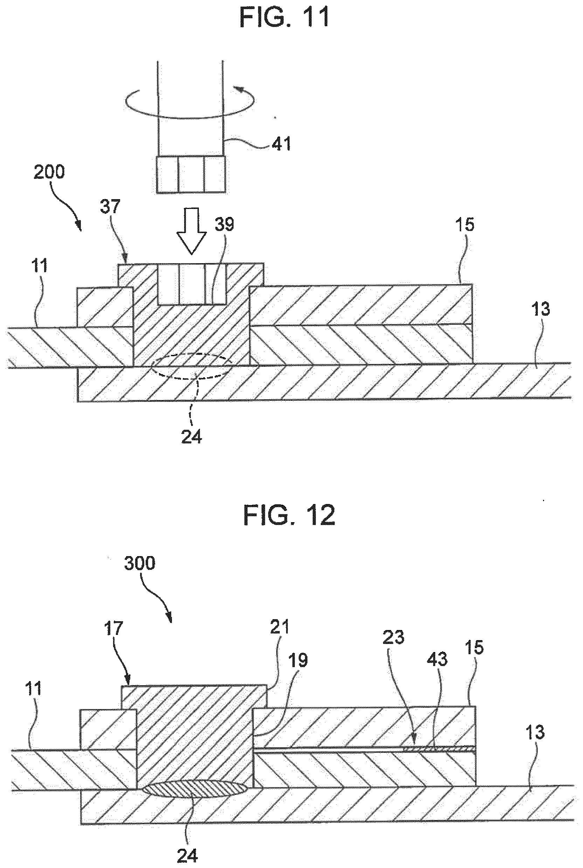

Fig. 11 is a sectional view of a different-material joining structure of a second configuration example.

In the different-material joining structure 200 of the second configuration example, the rivet 37 and the second member 13 are fixed by friction welding. That is, in the rivet 37, a hexagonal key 41 is inserted into a hexagonal hole 39 and rotated. At the same time, the rivet 37 is pushed into the third member 15 and the first member 11, and the tip end of the rivet shank and the second member 13 are friction-welded.

According to this different-material joining structure 200, as a result of the frictional heat generated at the tip end of the rivet shank and the second member 13, the contact part is heated to such an extent that it melts. After the rotation of the rivet 37 is stopped, the melted contact part solidifies and remains in both materials, thereby firmly connecting the rivet 37 and the second member 13.

Fig. 12 is a sectional view of a different-material joining structure of a third configuration example.

In the different-material joining structure 300 of the third configuration example, the joining part 23 includes an adhesive layer 43 joining the first member 11 and the third member 15.

According to this different-material joining structure 300, since the joining part 23 includes the adhesive layer 43 joining the first member 11 and the third member 15, it is possible to easily fix the first member 11 and the third member 15 without requiring large-scale equipment such as a resistance spot welder or a laser welder. In addition, it is possible to easily fix metal and resin, which are difficult to weld.

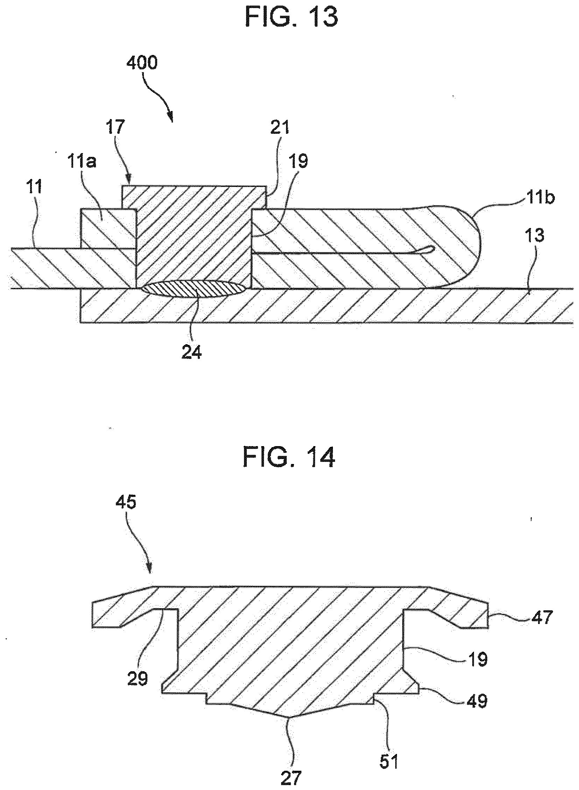

Fig. 13 is a sectional view of a different-material joining structure of a fourth configuration example.

In the different-material joining structure 400 of the fourth configuration example, the third member 15 of the different-material joining structure 100 of the first configuration example described above is formed by a hemming process in which an end part 11a of the first member is folded by 180°. The folded bent part 11b functions as the above-described joining part.

According to this different-material joining structure 400, the first member 11 forms the third member by its end part 11a, and the bent part 11b serves as the joining part. As a result, the number of parts is reduced, and the rigidity can be further enhanced. Therefore, the joining strength of the members can be further enhanced. In addition to the bent part 11b, the aforementioned joining part may be newly formed on the end part 11a of the folded first member 11. In that case, the joining strength can be further improved.

Fig. 14 is a sectional view of a rivet usable for a different-material joining structure.

The rivet 45 shown in the figure may be used for the different-material joining structure 100. In the rivet 45, the upper outer peripheral part 47 of the head part 21 is inclined toward the shank part side, and the head part 21 is thinned as a whole. An enlarged diameter part 49 is formed at the tip end of the shank part 19. A second shank part 51 is formed so as to protrude from the tip end face of the enlarged diameter part 49.

According to this rivet 45, by reducing the thickness of the head part 21, the weight of the rivet 45 can be reduced. In addition, since the upper outer peripheral part 47 of the head part 21 is inclined, the step difference from the light alloy material after clinching is reduced.

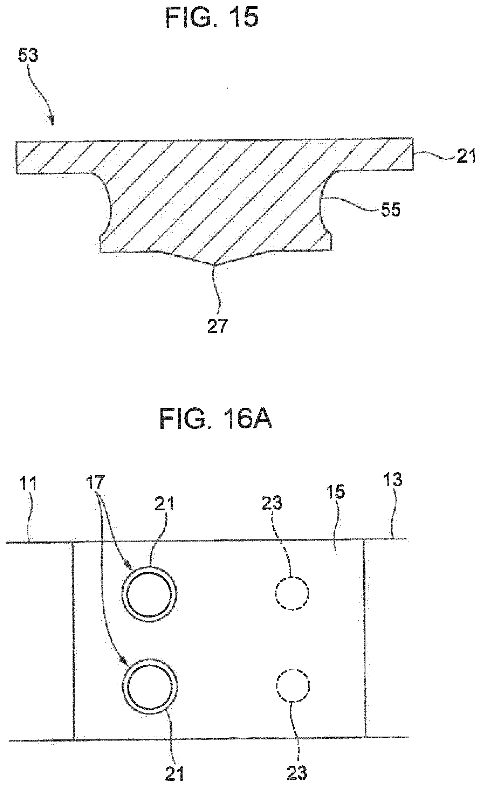

Fig. 15 is a sectional view of another rivet usable for a different-material joining structure.

The rivet 53 shown in the figure may be used for the different-material joining structure 100. The rivet 53 differs from the rivet 17 in that the diameter of the shank part 55 increases toward the tip end and a shallow undercut is formed. It is the same as the rivet 17 in other respects.

According to this rivet 53, since the surface of the shank part 55 is slightly inclined, the clinching between the rivet 53 and the light alloy material is strengthened.

Figs. 16A and 16B are plan views showing modifications of the different-material joining structure having other examples of the joining part.

In the above-described configuration example, the joining part 23 is disposed on a straight line that passes through the center of the rivet 17 and is along the tensile direction, in a one-to-one positional relationship with the rivet 17, but as shown in Fig. 16A, a plurality of pairs of a rivet 17 and a joining part 23 may be arranged in parallel in a direction perpendicular to the tensile direction.

According to this configuration, the tensile strength of the first member 11 and the second member 13 can be further enhanced. In addition, as shown in Fig. 16B, one joining part 23 may be provided in the middle part between a pair of rivets 17. According to this configuration, it is possible to obtain the above effect of the third member 15 whose warpage is restricted by the joining part 23 while reducing the work of forming the joining part 23.

Therefore, according to the different-material joining structure of this configuration, it is possible to improve different material joining strength while satisfying weight reduction.

As described above, the present invention is not limited to the above-described embodiments, and combining the configurations of the embodiments with each other and modification and application by a person skilled in the art based on the description of the specification and well-known technology are anticipated by the present invention and are included in the scope of the protection.

As described above, the following items are disclosed in this specification.
(1) A different-material joining structure including a plurality of different types of plate materials stacked on one other and secured by means of a rivet,
   wherein the plate materials include a first member and a second member of which end surfaces at one end of each overlap each other, and a third member arranged overlapping the surface of the first member on the opposite side to the second member,
   wherein the rivet has a shank part penetrating through the first member and the third member and joined to the second member at a tip end thereof, and a head part not inserted into the third member and remaining on the surface of the third member, and
   wherein a joining part for joining the first member and the third member together is formed in at least a part of an overlapping region of the first member and the third member, on the side toward the other end of the second member relative to the position at which the rivet penetrates.

According to this different-material joining structure, the reaction force from the shank part of the rivet is shared by the third member. Therefore, in the first member, expansion of the rivet through hole in the tensile direction is suppressed. In addition, the inclination of the rivet is relieved by the deformation of the third member. Further, in the different-material joining structure makes, the third member can contribute to improving the strength of the joining structure.
(2) The different-material joining structure according to (1), wherein the rivet is provided in a state being clinched and fixed to at least one of the first member and the third member.

According to this different-material joining structure, it is possible to obtain high joining strength due to a synergistic effect of the sandwiching structure of the third member, the first member, and the second member by the rivet and the clinching and fixing of the rivet, the first member, and the third member.
(3) The different-material joining structure according to (1) or (2), wherein at least one of the first member and the third member is made of an aluminum alloy material.

According to this different-material joining structure, the members can be joined with high strength, and as compared with the case where they are made of a steel material, the weight can be reduced.
(4) The different-material joining structure according to any one of (1) to (3), wherein the joining part includes an adhesive layer joining the first member and the third member.

According to this different-material joining structure 300, it is possible to easily fix the first member and the third member without requiring large-scale equipment such as a resistance spot welder dedicated to aluminum or a laser welder. In addition, it is possible to easily fix metal and resin, which are difficult to weld.
(5) The different-material joining structure according to (1) or (2), wherein the first member and the third member are made of the same type of metal material, and the joining part includes a welded part joining the first member and the third member.

According to this different-material joining structure, since the first member and the third member are made of the same type of metal (for example, aluminum), an intermetallic compound is not generated at the welded part, and a strong joining part can be obtained.
(6) The different-material joining structure according to any one of (1) to (5), wherein the third member is formed by stacking a plurality of plate materials.

According to this different-material joining structure, the third member is stacked by combining materials of various characteristics and strength. Thereby, it is possible to add various functions such as decorativeness, corrosion resistance, insulation and the like to the third member on the upper surface side.
(7) The different-material joining structure according to any one of (1) to (5), wherein the third member is formed by folding an end of the first member, and the joining part includes a bent part of the folded first member.

According to this different-material joining structure, since the third member is formed by folding the first member and the folded part serves as the joining part, the number of parts can be reduced, and since the first member and the third member are integrated, the rigidity is further increased, and the joining strength can be further enhanced.

This application is based on Japanese patent application (Japanese Patent Application No. 2015-253936) filed on December 25, 2015, the contents of which are incorporated herein by reference.

### Reference Signs List

11 first member
11a end part
11b bent part
13 second member
15 third member
17 rivet
19 shank part
21 head part
23 joining part
31 welded part
43 adhesive layer
100, 100A, 200, 300, 400 different-material joining structure

## Claims

1. A different-material joining structure comprising a plurality of different types of plate materials stacked on one other and secured by means of a rivet,
wherein the plate materials include a first member and a second member of which end surfaces at one end of each overlap each other, and a third member arranged overlapping the surface of the first member on the opposite side to the second member,
wherein the rivet has a shank part penetrating through the first member and the third member and joined to the second member at a tip end thereof, and a head part not inserted into the third member and remaining on the surface of the third member, and
wherein a joining part for joining the first member and the third member together is formed in at least a part of an overlapping region of the first member and the third member, on the side toward the other end of the second member relative to the position at which the rivet penetrates.

2. The different-material joining structure according to Claim 1, wherein the rivet is provided in a state being clinched and fixed to at least one of the first member and the third member.

3. The different-material joining structure according to Claim 1 or 2, wherein at least one of the first member and the third member is made of an aluminum alloy material.

4. The different-material joining structure according to Claim 1 or 2, wherein the joining part includes an adhesive layer joining the first member and the third member.

5. The different-material joining structure according to Claim 3, wherein the joining part includes an adhesive layer joining the first member and the third member.

6. The different-material joining structure according to Claim 1 or 2, wherein the first member and the third member are made of the same type of metal material, and the joining part includes a welded part joining the first member and the third member.

7. The different-material joining structure according to Claim 1 or 2, wherein the third member is formed by stacking a plurality of plate materials.

8. The different-material joining structure according to Claim 3, wherein the third member is formed by stacking a plurality of plate materials.

9. The different-material joining structure according to Claim 4, wherein the third member is formed by stacking a plurality of plate materials.

10. The different-material joining structure according to Claim 5, wherein the third member is formed by stacking a plurality of plate materials.

11. The different-material joining structure according to Claim 6, wherein the third member is formed by stacking a plurality of plate materials.

12. The different-material joining structure according to Claim 1 or 2, wherein the third member is formed by folding an end of the first member, and the joining part includes a bent part of the folded first member.

13. The different-material joining structure according to Claim 3, wherein the third member is formed by folding an end of the first member, and the joining part includes a bent part of the folded first member.

14. The different-material joining structure according to Claim 4, wherein the third member is formed by folding an end of the first member, and the joining part includes a bent part of the folded first member.

15. The different-material joining structure according to Claim 6, wherein the third member is formed by folding an end of the first member, and the joining part includes a bent part of the folded first member.
